# EUROPÄISCHE PATENTSCHRIFT

(11) **EP 0 475 978 B1**
(45) Veröffentlichungstag und Bekanntmachung des Hinweises auf die Patenterteilung: **14.07.1993**
(21) Anmeldenummer: 90908494.9
(22) Anmeldetag: 06.06.1990
(51) Int. Cl.: F16C 13/00

(54) **WALZE**
ROLLER
ROULEAU

(30) Priorität: 10.06.1989 DE 3918989
(43) Veröffentlichungstag der Anmeldung: 25.03.1992
(73) Patentinhaber: Eduard Küsters Maschinenfabrik GmbH & Co. KG, 47805 Krefeld (DE)
(72) Erfinder: KÜSTERS, Karl-Heinz, D-4150 Krefeld (DE)
(74) Vertreter: Palgen, Peter, Dr. Dipl.-Phys.
(86) Internationale Anmeldenummer: DE9000432
(87) Internationale Veröffentlichungsnummer: WO9015263

(56) Entgegenhaltungen:
- EP-A- 0 273 185
- DE-A- 2 907 761
- FR-A- 2 334 002
- FR-A- 2 356 045
- GB-A- 2 220 047

## Beschreibung

Die Erfindung bezieht sich auf eine Walze der dem Oberbegriff des Anspruchs 1 entsprechenden Art.

Eine solche Walze ist aus der DE-A-2907 761 bekannt. Hierbei fahren im Betrieb die Dichtungsglieder aus und verlagern die Hohlwalze gegenüber dem Querhaupt bis ein Kräftegleichgewichter reicht ist. Die dabei sich einstellende Position ist unbestimmt.

Für eine Positionierung der Dichtungsglieder bzw. der Hohlwalze gegenüber dem Querhaupt besteht jedoch in manchen Fällen eine Bedarf z.B. dann, wenn eine Walze mit radial gegenüber dem über dem Querhaupt in der Wirkebene frei beweglicher Hohlwalze als Unterwalze in einem Kalander arbeiten soll. Ohne Positionierung wäre die Lage der Hohlwalze nur von den Kräften abhängig und könnte im Extremfall das durchgebogene Querhaupt im Innenumfang der umlaufenden Hohlwalze zur Anlage kommen.

Es sind daher für die Positionierung der in der Wirkebene frei verlagerbaren Hohlwalzen bereits Steuerungen entwickelt worden, die auf den Dichtungsgliedern vergleichbare Stützelemente (DE-B-28 49 253, DE-A-30 26 865) bzw. an dem Querhaupt angreifende äußere Kraftglieder (DE-A-29 43 644) wirken. Bei diesen Ausführungsformen wird jedoch der Umweg über eine äußere Regelung genommen, was mit einer entsprechende verringerten Ansprechempfindlichkeit und erheblichem zusätzlichen Aufwand verbunden ist.

Eine direkte, durch die Gestaltung des einzelnen Dichtungsgliedes wirksame Beeinflussung der Ausfahrbewegung desselben ist durch die DE-C-38 05 323 gegeben. Hierbei handelt es sich aber um ein Dichtungsglied anderer Art, nämlich um ein Stützelement mit gedrosseltem Durchgang von der Zylinderkammer zur Lagertasche. Bei zu weitem Ausfahren gibt das Dichtungsglied Ableitkanäle frei, wodurch der Druck zusammenbricht. Das bekannte Stützelement dient also nur dazu, in einem Notfall von einer Seite her eine Grenzlage nicht zu überschreiten. Für Positionierungszwecke, d.h. für die Einhaltung einer bestimmten Lage in beiden Richtungen, ist diese Ausführungsform nicht geeignet. Dies gilt auch deshalb, weil bei Eintreten der Lagebeeinflussung der Druck geändert wird, was bei einer Positionierung im Betrieb nicht sein darf.

Der Erfindung liegt die Aufgabe zugrunde, eine Positionierung der Hohlwalze gegenüber dem Querhaupt in der Wirkebene auf direktem Wege und ohne wesentlichen zusätzlichen Aufwand zu ermöglichen.

Diese Aufgabe wird durch die in Anspruch 1 wiedergegebene Erfindung gelöst.

Wenn der Anschlag erreicht ist, wird das Dichtungsglied mechanisch festgehalten und kann nicht weiter ausfahren. Dadurch ergibt sich die Positionierung. Die der Zylinderkammer zugeführte Druckflüssigkeit gelangt jedoch über die Durchlässe nach wie vor in die Lagertaschen und bildet darin das hydrostatische Druckpolster. In der Praxis werden Walzen der in Rede stehenden Art nicht nur hinsichtlich der Linienkraftverteilung, sondern auch hinsichtlich der Temperaturverteilung gesteuert. Aus Gründen der gleichmäßigen Wärmeübertragung auf den Innenumfang der Hohlwalze wird dabei ganz überwiegend der Mengenstrom der den Lagertaschen zugeführten Druckflüssigkeit konstant gehalten. Es tritt also an der Berandung der Lagertaschen stets die gleiche Menge an Flüssigkeit über. Wird die Linienkraft im Walzspalt größer, so wird der Spalt an der Berandung der Lagertaschen enger und steigt der Druck bei gleichbleibender durchgesetzter Menge an. Nimmt die Linienkraft ab, vermag die Druckflüssigkeit in den Lagertaschen die Hohlwalze etwas anzuheben, wodurch der Spalt an der Berandung größer wird und die Druckflüssigkeit leichter abströmen kann. Der Druck in den Lagertaschen sinkt hierdurch etwas ab. Es stellt sich schließlich bei jedem Zustand im Walzspalt ein entsprechendes Gleichgewicht an der Berandung der Lagertaschen ein.

An einer hydraulischen Stützvorrichtung allgemeiner Art sind Anschläge zur Begrenzung der Ausfahrbewegung aus der FR-A-23 34 002 ansich bekannt. Die hydrostatischen Lagertaschen der Kolbenartigen Dichtungsglieder werden hierbei allerdings durch gedrosselte Zuleitungen gespeist.

Bei der bevorzugten Ausführungsform der Erfindung sind die Anschläge nur an den endständigen Dichtungsgliedern vorgesehen, weil dies zur Einhaltung einer bestimmten Lage der Hohlwalze ausreicht.

Um mit der erfindungsgemäßen Walze auch eine von der gleichmäßigen Linienkraftverteilung abweichende Linienkraftverteilung fahren zu können, ist die Ausgestaltung nach Anspruch 3 wichtig.

Die sich in den endständigen Dichtungsgliedern einstellenden Druckwerte werden hierbei als anteilige Sollwerte auf Regler für die dazwischenliegenden Dichtungsglieder gegeben. Es kann jedem einzelnen Dichtungsglied ein eigener Regler zugeordnet sein, doch werden im allgemeinen Gruppen von Dichtungsgliedern, beispielsweise eine mittlere Gruppe und zwei seitliche Gruppen, gemeinsam versorgt werden. Diesen Reglern werden mittels eines externen Sollwert-Gebers zusätzliche Sollwert-Anteile aufgegeben, die zusammen mit dem anteiligen Sollwert der endständigen Dichtungsglieder jeweils den Gesamt-Sollwert ergeben und somit die Einsteuerung eines gewünschten, von einem gleichmäßigen Wert abweichenden Linienkraftverlaufs gestattet.

In der Zeichnung sind Ausführungsbeispiele der Erfindung schematisch dargestellt.
Fig. 1 zeigt eine schematische Wiedergabe einer ersten Ausführungsform der Erfindung, teilweise im Schnitt;
Fig. 2 zeigt einen Schnitt durch den Bereich der Dichtungsglieder;
Fig. 3 zeigt eine Fig. 1 entsprechende Darstellung einer Ausführungsform mit erweiterter Steuerung.

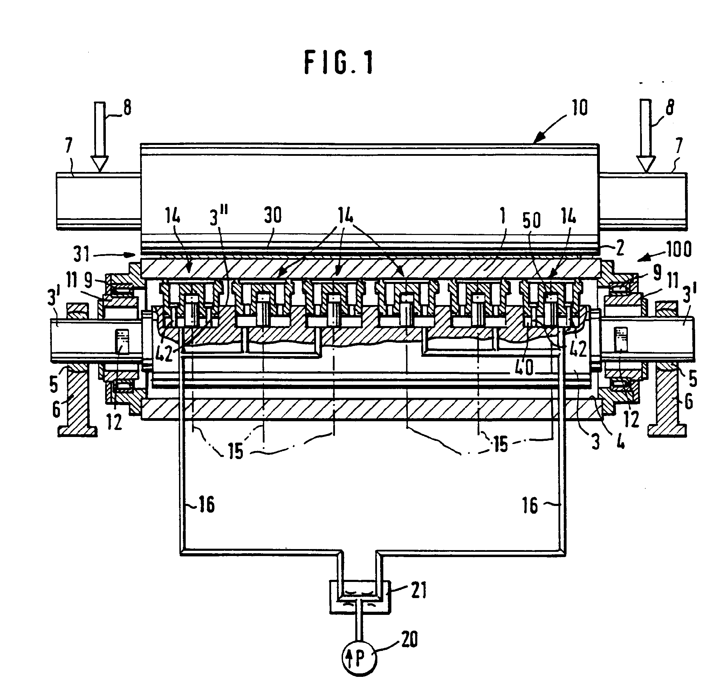

Das in Fig. 1 dargestellte Walzenpaar umfaßt eine Oberwalze 10 und eine Unterwalze 100, zwischen denen eine Warenbahn 30 einer Druckbehandlung in dem Walzspalt 31 ausgesetzt wird. Die Oberwalze 10 ist eine konventionelle massive Walze. Die Unterwalze 100 hingegen umfaßt eine umlaufende Hohlwalze 1, deren Außenumfang 2 den arbeitenden Walzenumfang bildet und die der Länge nach von einem undrehbaren Querhaupt 3 durchgriffen ist, welches allseitig Abstand zum Innenumfang 4 der Hohlwalze 1 beläßt, so daß es sich innerhalb der Hohlwalze 1 verlagern kann, ohne mit dem Innenumfang 4 in Berührung zu kommen. Die aus der Hohlwalze 1 hervorstehenden Enden 3' des Querhauptes 3 sind in Lagern 5 mit Kugelkalotten in einem nur angedeuteten Walzenständer 6 gelagert. Die Oberwalze 10 ist an den Walzenzapfen 7 durch äußere Kräfte belastet, die durch die durch Pfeile 8 symbolisierten Kraftausübungseinrichtungen aufgebracht werden.

Die Hohlwalze 1 kann sich gegnüber dem Querhaupt 3 in der in der Zeichenebene gelegenen Wirkebene als Ganzes verlagern. Sie ist an den Enden auf Wälzlagern 9 an Führungsringen 11 geführt, die nicht drehbar, wohl aber in der Wirkebene an parallel zu dieser sich erstreckenden Gleitflächen 12 verschiebbar sind.

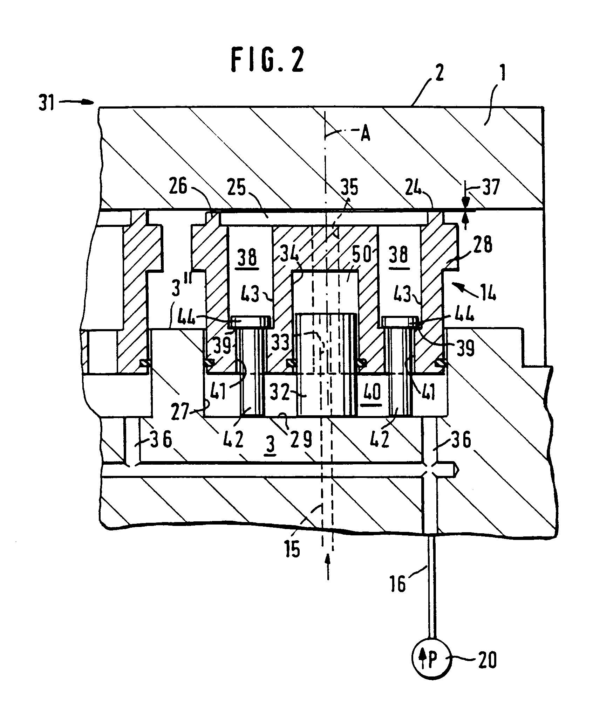

Auf der gegen den Walzspalt 31 gerichteten Oberseite 3'' des Querhauptes 3 sind über die Länge der Hohlwalze 1 verteilt mehrere, in dem dargestellten Ausführungsbeispiel sechs, hydraulische Belastungseinrichtungen in Gestalt von Dichtungsgliedern 14 angeordnet, die mit ihrer dem Innenumfang 4 der Hohlwalze 1 in der Gestalt angepaßten Anlagefläche 24 am Innenumfang 4 der Hohlwalze 1 anliegen (Fig. 2). In der Anlagefläche 24 sind flache Lagertaschen 25 ausgebildet, die einen wesentlichen Teil der Anlagefläche 24 einnehmen, so daß von ihr nur berandende Stege 26 übrigbleiben. In dem Ausführungsbeispiel weisen die Dichtungsglieder 14 eine Achse A auf und sind im Querschnitt kreisrund. Sie bestehen aus einem in einer Zylindersackbohrung 27 an der Oberseite 3'' des Querhauptes 3 radial zum Querhaupt 3 verschiebbar geführten kolbenartigen zylindrischen Körper 28, der zwischen seiner Unterseite und dem Boden 29 der Zylindersackbohrung 27 einen Zylinderraum 40 einschließt. Auf dem Boden 29 ist koaxial zu der Zylindersackbohrung 27 ein zylindrischer Kolben 32 dicht befestigt, der eine längs durchgehende Bohrung 33 aufweist, die mit einer Zuleitung 15 im Querhaupt in Verbindung steht. Der Kolben 32 greift von unten abgedichtet in eine Zylindersackbohrung 34 ein, die von unten in den Körper 28 des Dichtungsgliedes 14 geführt ist, so daß oberhalb des Kolbens eine geschlossene Zylinderkammer 50 gebildet ist, die über die Zuleitung 15 mit einem wählbaren Druck beaufschlagt werden kann.

Der Körper 28 des Dichtungsgliedes 14 weist vor und hinter der Zeichenebene gelegene drosselfreie Durchlässe 35 auf, die eine Verbindung zwischen dem Zylinderraum 40 unterhalb des Dichtungsgliedes 14 und der Lagertasche 25 an seiner Oberseite herstellen.

Der Zylinderraum steht über Zweigleitungen 36 mit einer Zuleitung 16 im Querhaupt 3 in Verbindung, durch die Druckflüssigkeit von einer mengengeregelten Pumpe 20 herangeführt wird, die ungeachtet des Gegendrucks eine pro Zeiteinheit gleichmäßige Menge an Druckflüssigkeit abgibt. Die Druckflüssigkeit tritt in den Zylinderraum 40 ein und über die Durchlässe 35 in die Lagertaschen über, woraus sie durch den Spalt 37 zwischen der Anlagefläche 24 und dem Innenumfang 4 der Hohlwalze 1 nach außen abströmt und dort einen tragfähigen Flüssigkeitsfilm bildet, der ein Vorbeigleiten der umlaufenden Hohlwalze 1 an dem feststehenden Dichtungsglied 14 ohne metallische und nur mit Flüssigkeitsreibung ermöglicht.

Das Andrücken des Dichtungsgliedes 14 gegen den Innenumfang 4 der Hohlwalze 1 geschieht durch den Druck in der Zylinderkammer 50, der die Kraft bestimmt, mit welcher das Dichtungsglied 14 gegen den Innenumfang 4 der Hohlwalze 1 angepreßt wird und mit der der Spalt 37 zugehalten wird. Je höher diese Kraft ist, umso höher ist der Abströmwiderstand für die Druckflüssigkeit an dem Spalt 37, und desto höher ist der Druck, der sich in der Lagertaschen 25 ausbildet, wenn mittels der Pumpe 20 stets die gleiche Menge an Druckflüssigkeit herangefördert wird. Von dem Druck in der Lagertasche 25 hängt die gegen den Innenumfang der Hohlwalze 1 ausgeübte Kraft und damit auch die Linienkraft im Walzspalt 31 ab.

Durch den Körper 28 des Dichtungsgliedes 14 sind in dem Ausführungsbeispiel zwei Stufenbohrungen 38 hindurchgeführt, die in ihrem unteren Bereich enger sind und eine Stufe 39 bilden. Auf dem Boden 29 der Zylindersackbohrung 27 sind Kopfbolzen 42 befestigt, zum Beispiel eingeschraubt, die mit ihrem Schaft den engeren unteren Teil 41 der Stufenbohrung 38 durchgreifen und am oberen Ende einen radial ausladenden Kopf 44 aufweisen, der in dem oberen größeren Teil 43 der Stufenbohrung 38 Platz hat. In der in Fig. 2 gezeigten Stellung liegt der Kopf 44 auf der Stufe 39 an und bildet einen Anschlag gegen weiteres Ausfahren des Dichtungsgliedes 14 aus der Oberseite 3'' des Querhauptes 3. Ist das Dichtungsglied 14 weiter eingefahren, so kann es sich, da an den Kopfbolzen 42 allseitiges Spiel vorgesehen ist, frei bewegen.

Die Kopfbolzen 42 bestimmen eine eindeutige maximale Ausfahrstellung des Dichtungsgliedes 14 und damit eine eindeutige Lage der Hohlwalze 1 gegnüber dem Querhaupt 3.

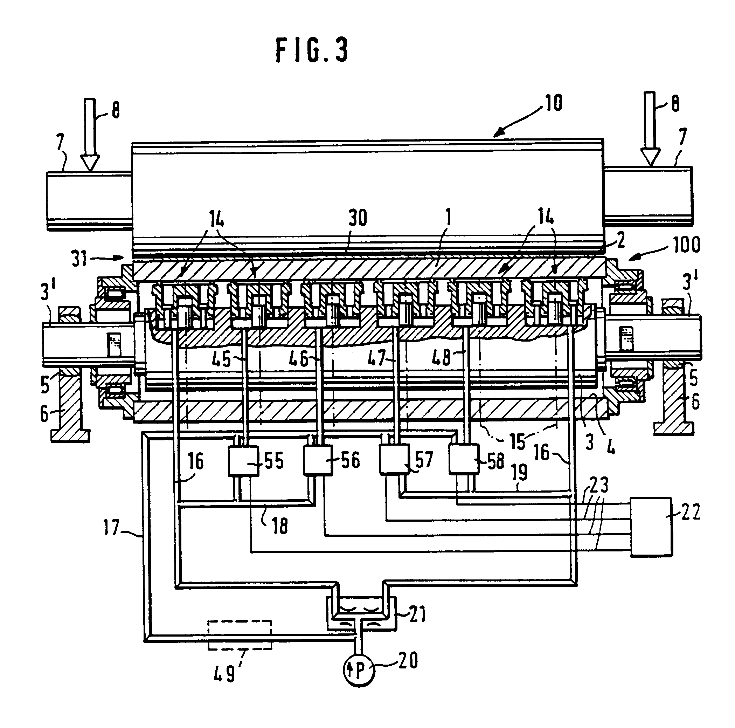

Es reicht aus, wenn in der aus den Fig. 1 und 3 ersichtlichen Weise nur die endständigen Dichtungsglieder 14 Anschläge in Gestalt der Kopfbolzen 42 aufweisen. Bei den dazwischenliegenden Dichtungsgliedern 14 fehlen die Kopfbolzen 42.

Die mengengeregelte Pumpe 20 ist in Fig. 2 nur schematisch angedeutet. In Wirklichkeit ist die Ausführungsform entsprechend Fig. 1, wo sich an die mengengeregelte Pumpe 20 ein Stromteiler 21 anschließt, der jeweils die Hälfte des Gesamtstroms auf die Zuleitungen 16 für jeweils drei rechts und links gelegene Dichtungsglieder 14 aufteilt. Die Zuleitungen 15 für die den Druck bestimmenden Zylinderkammern 50 sind an eine nicht dargestellte Steuereinrichtung angeschlossen, die es ermöglicht, mit jedem Dichtungsglied 14 eine wählbare Kraft gegen den Innenumfang 4 der Hohlwalze 1 auszuüben.

Bei der Ausführungsform nach Fig. 3 kann auch der Zustrom an Druckflüssigkeit bei den mitteleren Dichtungsgliedern 14 geregelt werden. Die beiden äußeren Dichtungsglieder 14 werden über den Stromteiler 21 und die Zuleitungen 16 in der gleichen Weise versorgt, wie es bei der Ausführungsform nach Fig. 1 der Fall war. Die inneren Dichtungsglieder 14 hängen aber im Gegensatz dazu nicht an der gleichen Zuleitung 16, sondern haben eigene Zuleitungen 45,46,47,48, in denen Regler 55,56,57,58 angeordnet sind. Die Regler 55,56,57,58 bestimmen, wieviel von der über die Leitung 17 herangeführten Druckflüssigkeit der Pumpe 20 auf die Leitungen 45,46,47,48 gelangt. Als anteiliger Sollwert wird auf die Regler jeweils der Druck der Zuleitungen 16 der beiden endständigen Dichtungsglieder 14 über die Leitungen 18,19 abgegriffen. Außerdem ist ein externer Sollwert-Geber 22 vorgesehen, der über die Leitungen 23 den Restanteil des jeweiligen Sollwertes liefert.

Mit der Ausführungsform nach Fig. 3 ist eine verfeinerte Profilkorrektur im Walzspalt 31 möglich. Insbesondere kann auch ein Temperaturprofil eingestellt werden, wenn der gestrichelt angedeutete Wärmetauscher 49 vorhanden ist.

## Patentansprüche

1. Walze zur Druckbehandlung von Warenbahnen,
mit einer den arbeitenden Walzenumfang (2) bildenden drehbaren Hohlwalze (1), die der Länge nach von einem feststehenden, ringsum Abstand zum Innenumfang der Hohlwalze belassenden Querhaupt (3) durchgriffen ist,
mit gegen den Innenumfang (4) der Hohlwalze (1) wirkenden hydraulischen Belastungseinrichtungen, über welche die Hohlwalze (1) an dem Querhaupt (3) in der Wirkebene abgestützt ist und die in radialen, Zylinderräume (40) bildenden Zylindersackbohrungen (27) des Querhaupts (3) jeweils ein kolbenartiges, aus dem Querhaupt (3) ausfahrbares Dichtungsglied (14) umfassen, das eine dem Innenumfang (4) der Hohlwalze (1) in der Form angepaßte Anlagefläche (24), die durch einen eine gegen den Innenumfang (4) der Hohlwalze (1) offene hydrostatische Lagertasche (25) ringsum geschlossen umgrenzenden Rand (26) gebildet ist, aufweist, wobei eine Zuleitung (16) für Druckflüssigkeit in den Zylinderraum (40) mündet und der Zylinderraum (40) über einen Durchgangskanal (35) in dem Dichtungsglied (14) drosselfrei mit der Lagertasche (25) in Verbindung steht,
und mit Mitteln (32,34,15) zum Andrücken des jeweiligen Dichtungsgliedes (14) gegen den Innenumfang (4) der Hohlwalze (1),
dadurch gekennzeichnet,
daß die Mittel (32,34,15) zum Andrücken des jeweiligen Dichtungsgliedes (14) eine jedem Dichtungsglied (14) zugeordnete, bis auf eine separate, steuerbaren Druck führende Zuleitung (15) geschlossene Kolben/Zylindereinheit (32,34) umfassen, von der ein Teil mit dem Dichtungsglied (14), der andere Teil mit dem Querhaupt (3) verbunden ist,
und daß an mindestens einem Dichtungsglied (14) ein Anschlag (44) zur Begrenzung der Ausfahrbewegung vorgesehen ist, der durch einen im Boden (29) des Zylinderraums (40) befestigten, eine achsparallele Stufenbohrung (38) des Dichtungsgliedes (14) durchgreifenden Kopfbolzen (42) gebildet ist, der mit der Unterseite des Kopfes (44) auf der Stufe (39) zur Anlage kommt.

2. Walze nach Anspruch 1, dadurch gekennzeichnet, daß Anschläge (44) nur an den beiden endständigen Dichtungsgliedern (14) vorgesehen sind.

3. Walze nach Anspruch 2, dadurch gekennzeichnet, daß die Zuleitungen (16) für die endständigen Dichtungsgleider (14) mit Reglern (55, 56, 57, 58) für die dazwischenliegenden Dichtungsglieder (14) verbunden sind, an die zusätzlich ein externer Sollwert-Geber (22) angeschlossen ist.

## Claims

1. A roll for the pressure treatment of cloth webs, the roll having:
a rotatable shell (1) which serves as the operative periphery (2) of the roll, a stationary beam (3) extending through the shell lengthwise thereof and being spaced apart all the way round from the shell inner periphery,
hydraulic loading devices which act on the shell inner periphery (4) and by way of which the shell (1) is supported on the beam (3) in the operative plane and which each comprise a piston-like sealing member (14) in radial blind cylinder bores (27) of the beam, the bores forming cylinder chambers (40), each sealing member being adapted to extend from the beam (3) and having a contact surface (24) adapted in shape to the shell inner periphery (4), the contact surface (24) being in the form of an edge (26) providing a closure boundary around a hydrostatic bearing pocket (25) open towards the shell inner periphery (4), a hydraulic feed line (16) extending into the cylinder chamber (40), the same having unrestricted communication with the bearing pocket (25) by way of a through duct (35) in the sealing member (14),
and means (32, 34, 15) for pressing the sealing members (14) on to the shell inner periphery (4),
characterised in that
the means (32, 34, 15) for pressing the sealing members (14) comprise a reciprocating actuator (32, 34) associated with each sealing member (14) and closed except for a separate feed line (15) at a controllable pressure, one part of the actuator being connected to the sealing member (14) and the other part to the beam (3),
and an abutment (44) for limiting the extension movement is provided on at least one sealing member (14) and is in the form of a headed pin (42) secured in the base (29) of the cylinder chamber (40) and extending through a stepped bore (38) in the sealing member (14), the stepped bore extending parallel to the axis of the sealing member (14), the pin (42) engaging with the step (39) by way of the underside of its head (44).

2. A roll according to claim 1, characterised in that abutments 44) are provided only on the two end sealing members (14).

3. A roll according to claim 2, characterised in that the feed lines (16) for the end sealing members (14) are connected to controllers (55 - 58) for the intermediate sealing members (14) to which an external set-value transmitter (22) is also connected.

## Revendications

1. Cylindre pour le traitement sous pression de bandes de marchandise,
- avec un cylindre creux (1) tournant formant la périphérie de travail (2) du laminage, qui est traversé dans sa longueur par une traverse d'entretoisement (3) fixe, laissant tout autour de l'espace par rapport à la périphérie interne du cylindre creux,
- avec des dispositifs de charge hydraulique agissant contre la périphérie interne (4) de la traverse (3), par l'intermédiaire desquels le cylindre creux (1) est appuyé contre la traverse (3) dans le plan de travail et qui comprennent dans des alésages borgnes cylindriques, radiaux (27), de la traverse formant des chambres cylindriques (40) respectivement un élément d'étanchéité (14) amovible à partir de la traverse (3), du type piston, qui a une surface d'appui (24) adaptée dans sa forme à la périphérie interne (4) du cylindre creux (1), surface d'appui qui est formée par une bordure (26) entourant tout autour et de façon entièrement fermée une poche de réserve (25) hydrostatique, ouverte contre la périphérie interne (4) du cylindre creux (1), cylindre dans lequel une conduite (16) pour liquide sous pression débouche dans l'espace cylindrique (40) et l'espace cylindrique (40) est en communication par un canal de passage (35) dans l'élément d'étanchéité (14) sans étranglement, avec la poche de réserve (25),
- et avec des moyens (32, 34, 15) pour exercer une pression de l'élément d'étanchéité (14) correspondant contre la périphérie intérieure (4) du cylindre creux (1),
caractérisé
- en ce que les moyens (32, 34, 15) pour exercer la pression de l'élément d'étanchéité (14) comprennent un ensemble piston/cylindre (32, 34) associé à chaque élément d'étanchéité (14), fermé, à l'exception d'une conduite (15) séparée amenant la pression réglable, ensemble (32, 34) dont une partie est liée à l'élément d'étanchéité (14), et l'autre partie à la traverse (3), et
- en ce qu'il a été prévu sur au moins un élément d'étanchéité (14), une butée (44) pour limiter le mouvement de sortie, qui est formée par un boulon à tête (42) fixé dans le fond (29) de l'espace cylindrique (40), traversant un alésage à gradins (38) parallèle à l'axe de l'élément d'étanchéité (14), boulon qui vient en appui avec la face inférieure de sa tête contre le gradin (39).

2. Cylindre selon la revendication 1, caractérisé en ce que des butées (44) ne sont prévues que sur les deux éléments d'étanchéité (14) terminaux.

3. Cylindre selon la revendication 2, caractérisé en ce que les conduites (16) pour les éléments d'étanchéité (14) terminaux sont reliées à des régulateurs (55, 56, 57, 58) pour les éléments d'étanchéité intermédiaires (14), régulateurs auxquels est raccordé en plus un appareil transmetteur de valeurs de consigne extérieur (22).
